# FASCICULE DE BREVET EUROPEEN

(11) **EP 1 646 537 B1**
(45) Date de publication et mention de la délivrance du brevet: **20.10.2010**
(21) Numéro de dépôt: 04767757.0
(22) Date de dépôt: 22.07.2004
(51) Int. Cl.: B60R 21/20

(54) **PLANCHE DE BORD COMPORTANT UNE TRAPPE RETENUE PAR DES PONTETS**
MIT EINER DURCH KLEMMEN FESTGEHALTENEN KLAPPE VERSEHENES ARMATURENBRETT
INSTRUMENT PANEL PROVIDED WITH A TRAP HELD BY CLAMPS

(30) Priorité: 23.07.2003 FR 0309008
(43) Date de publication de la demande: 19.04.2006
(73) Titulaire: Faurecia Interieur Industrie, 92000 Nanterre (FR)
(72) Inventeur: MORDEL, Séverine, épouse BOULBES, F-95130 Franconville (FR); LAIME, Sébastien, F-60110 Meru (FR)
(74) Mandataire: Domenego, Bertrand
(86) Numéro de dépôt international: PCT/FR2004/001956
(87) Numéro de publication internationale: WO 2005/009802

(56) Documents cités:
- FR-A- 2 640 922
- FR-A- 2 717 132
- US-A1- 2002 153 710

## Description

L'invention concerne une coiffe de planche de bord destinée à recouvrir un module de coussin gonflable.

US-A-2002/0153710 décrit une coiffe constituée de plusieurs couches dont une couche structurelle en matériau plastique rigide, une peau et une couche de mousse s'étendant entre la couche structurelle et la peau, ladite couche structurelle présentant :
- au moins une trappe destinée à permettre le passage du coussin gonflable à travers la coiffe,
- une partie principale s'étendant autour de ladite trappe,
- des pontets s'étendant entre la trappe et la partie principale, et
- des ouvertures discontinues séparant ladite trappe et ladite partie principale l'une de l'autre, lesdites ouvertures étant interrompues par lesdits pontets,
- des affaiblissements mécaniques s'étendant entre deux ouvertures consécutives.

Lors de son déploiement, le coussin gonflable pousse sur la trappe. Les pontets maintenant la trappe par rapport à la partie principale se rompent sous l'effort et la trappe s'ouvrent. Toutefois, la rupture des pontets génère des éléments de matière saillants risquant d'endommager le coussin gonflable.

L'invention a donc pour but d'éviter que les pontets en se rompant constituent une agression potentielle vis-à-vis du sac gonflable.

A cet effet, l'invention a pour objet une coiffe de planche de bord selon la revendication 1.

Ainsi, la surface de rupture ne vient plus en saillie, mais au contraire en retrait pas rapport aux ouvertures ménagées dans la coiffe, ce qui évite que le coussin gonflable ne vienne à son contact lors de son déploiement.

La rupture des pontets est ainsi encore moins probable, ce qui favorise la rupture de la coiffe dans la partie principale, suivant les affaiblissements mécaniques.

De préférence, les affaiblissements mécaniques sont constitués par des rainures.

Cette solution est simple à réaliser, peu coûteuse et efficace.

De préférence, les pontets intègrent une nervure s'étendant transversalement par rapport à la direction d'allongement des ouvertures entre lesquelles le pontet correspondant s'étend.

Cette solution est également simple à réaliser, peu coûteuse et efficace.

Conformément à une autre caractéristique avantageuse de l'invention, la partie principale, la trappe et les pontets définissent un ensemble monobloc.

L'invention va apparaître encore plus clairement dans la description qui va suivre, faite en référence aux dessins annexés dans lesquels :
- la figure 1 est une vue en plan d'une coiffe conforme à l'invention,
- la figure 2 est une vue à échelle agrandie de la zone repérée II à la figure 1,
- la figure 3 est une vue en coupe selon la ligne repérée III-III à la figure 1.

Les figures illustrent une coiffe 1 définissant une partie de planche de bord et recouvrant un module 2 de coussin gonflable, ledit coussin gonflable étant destinée à se déployer à travers la coiffe 1 en direction d'un passager de véhicule automobile.

Ladite coiffe 1 comprend une couche structurelle 4 en matériau plastique rigide, une couche de mousse 8 assurant un toucher souple et une couche de revêtement constituée par une peau 6.

Afin de faciliter le passage du coussin gonflable à travers la coiffe 1, des ouvertures 16 ont été ménagées sur toute l'épaisseur de la couche structurelle 4. Ces ouvertures 16 délimitent une trappe 10 destinée à s'ouvrir sous la pression du coussin gonflable. Elles sont quasiment dépourvues de parties saillantes.

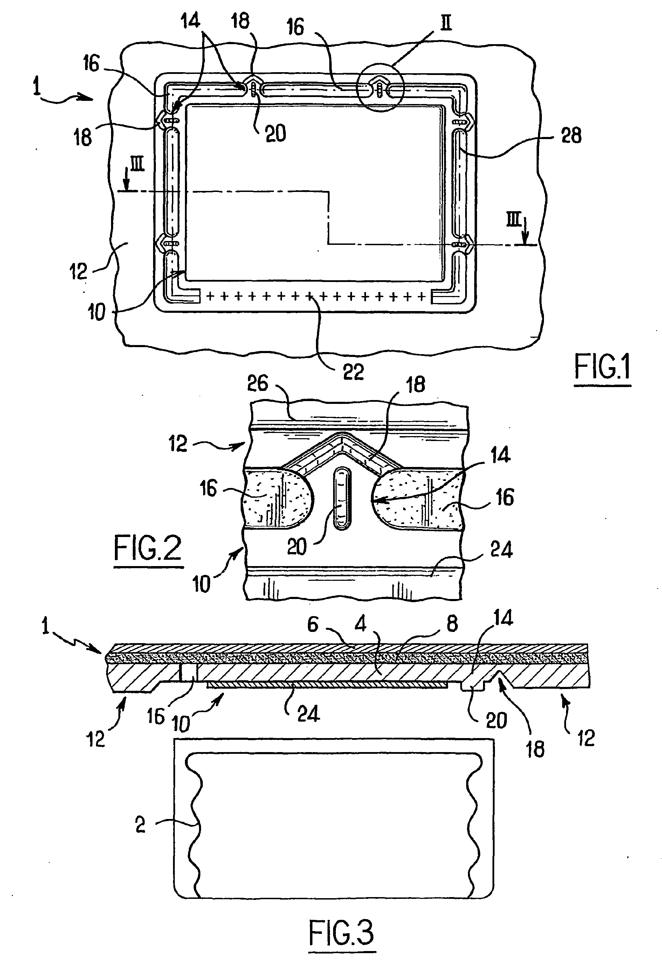

La trappe 10 est reliée à une partie principale 12 de la couche structurelle 4 par une zone de matière formant charnière 22 (symbolisée par des croix à la figure 1) et par des pontets 14 de matière s'étendant entre deux ouvertures 16 consécutives.

Tel qu'illustré, la trappe 10 est sensiblement rectangulaire. Elle est délimitée sur trois côtés sensiblement rectilignes par les ouvertures 16 s'étendant sensiblement dans le prolongement les unes des autres suivant une direction d'allongement 28 et sur le quatrième par la charnière 22.

La couche structurelle 4 présente un renforcement mécanique constitué par des nervures 20 sensiblement rectilignes s'étendant transversalement à la direction d'allongement 28.

La couche structurelle 4 présente en outre des affaiblissements mécaniques constitués par des rainures 18 s'étendant légèrement à l'intérieur de la partie principale 12, à l'écart des pontets 14, entre deux ouvertures 16 consécutives. Ces rainures 18 s'étendent sensiblement sur la moitié de l'épaisseur de la couche structurelle 4 suivant une ligne brisée. En alternative, elles pourraient notamment être courbes.

Pour éviter que des déchirures se propagent dans la partie principale 12, la couche structurelle 4 est mécaniquement renforcée autour des ouvertures 16 et des rainures 18, ici par une augmentation d'épaisseur 26. On pourrait également la renforcer au moyen d'une plaque métallique ou d'un filet noyé.

De même, la trappe est renforcée par une plaque métallique 24 fixée sur la trappe.

La couche structurelle 4 est avantageusement réalisée en polypropylène. Avantageusement, les rainures 18 sont obtenues de moulage et les ouvertures 16 sont réalisées par fraisage. Toutefois, il est également possible de faire l'inverse, ou de réaliser les ouvertures et les nervures de la même manière.

## Revendications

1. Coiffe (1) de planche de bord destinée à recouvrir un module (2) de coussin gonflable, ladite coiffe étant constituée de plusieurs couches dont une couche structurelle (4) en matériau plastique rigide, une peau (6) et une couche de mousse(8) s'étendant entre la couche structurelle et la peau, ladite couche structurelle (4) présentant :
- au moins une trappe (10) destinée à permettre le passage du coussin gonflable à travers la coiffe,
- une partie principale, (12) s'étendant autour de ladite trappe, et
- des pontets (14) s'étendant entre la trappe (10) et la partie principale (12),
- des ouvertures discontinues (16) séparant ladite trappe (10) et ladite partie principale (12) l'une de l'autre, lesdites ouvertures étant interrompues par lesdits pontets (14),
- des affaiblissements mécaniques (18) s'étendant entre deux ouvertures (18) consécutives,
**caractérisé en ce que**
- les affaiblissements mécaniques (18) s'étendent non pas dans le prolongement desdites ouvertures consécutives, mais en retrait à l'intérieur de la partie principale (12), et
- les pontets (14) sont mécaniquement renforcés (20) par rapport à la partie principale de la couche structurelle,
de sorte que lors du déploiement du coussin la couche structurelle (4) se rompt suivant les affaiblissements mécaniques (18), la trappe (10) et l'intégralité des pontets (14) constituant un ensemble s'ouvrant par déplacement par rapport au reste de la coiffe.

2. Coiffe de planche de bord selon la revendication 1, **caractérisée en ce que** les affaiblissements mécaniques sont constitués par des ralnures(18).

3. Coiffe de planche de bord selon l'une des revendications 1 et 2, **caractérisée en ce que** les pontets intègrent une nervure (20) s'étendant transversalement par rapport à la direction d'allongement des ouvertures entre lesquelles le pontet correspondant s'étend pour renforcer mécaniquement les pontets.

4. Coiffe de planche de bord selon l'une quelconque des revendications précédentes, **caractérisée en ce que** la partie principale (12), la trappe (10) et les pontets (14) définissent un ensemble monobloc.

## Claims

1. Dashboard cover (1) which is designed to cover an inflatable cushion module (2), the said cover being constituted by a plurality of layers, including a structural layer (4) made of rigid plastic material, a skin (6), and a foam layer (8) which extends between the structural layer and the skin, the said structural layer (4) having:
- at least one trap door (10) which is designed to permit the passage of the inflatable cushion through the cover;
- a main part (12) which extends around the said trap door; and
- catches (14) which extend between the trap door (10) and the main part (12);
- discontinuous openings (16) which separate the said trap door (10) and the said main part (12) from one another, the said openings being interrupted by the said catches (14);
- mechanical weakened parts (18) which extend between two consecutive openings (16),
**characterised in that**:
- the mechanical weakened parts (18) do not extend in the extension of the said consecutive openings, but recessed inside the main part (12); and
- the catches (14) are mechanically reinforced (20) relative to the main part of the structural layer,
such that, during the deployment of the cushion, the structural layer (4) breaks according to the mechanical weakened parts (18), the trap door (10) and all of the catches (14) constituting an assembly which opens by displacement relative to the remainder of the cover.

2. Dashboard cover according to claim 1, **characterised in that** the mechanical weakened parts are constituted by grooves (18).

3. Dashboard cover according to one of claims 1 and 2, **characterised in that** the catches incorporate a rib (20) which extends transversely relative to the direction of elongation of the openings between which the corresponding catch extends, in order to reinforce the catches mechanically.

4. Dashboard cover according to any one of the preceding claims, **characterised in that** the main part (12), the trap door (10) and the catches (14) define an assembly in a single piece.

## Patentansprüche

1. Abdeckung (1) für ein Armaturenbrett, die zum Abdecken eines Airbag-Moduls (2) bestimmt ist, wobei die Abdeckung aus mehreren Schichten einschließlich einer Strukturschicht (4) aus steifem Kunststoff, einer Haut (6) und einer sich zwischen der Strukturschicht und der Haut erstreckenden Schaumstoffschicht (8) gebildet ist, wobei die Strukturschicht (4) aufweist:
- mindestens eine Klappe (10), die vorgesehen ist, um das Passieren des Airbags durch die Abdeckung hindurch zu ermöglichen,
- einen Hauptteil (12), der sich um die Klappe herum erstreckt, und
- Stege (14), die sich zwischen der Klappe (10) und dem Hauptteil (12) erstrecken,
- unterbrochene Öffnungen (16), die die Klappe (10) und den Hauptteil (12) voneinander trennen, wobei die Öffnungen durch die Stege (14) unterbrochen sind, und
- mechanische Schwächungen (18), die sich zwischen zwei aufeinanderfolgenden Öffnungen (16) erstrecken,
**dadurch gekennzeichnet, dass**
- die mechanischen Schwächungen (18) sich nicht in der Verlängerung der aufeinanderfolgenden Öffnungen, sondern zurückversetzt in das Innere des Hauptteils (12) erstrecken, und
- dass die Stege (14) relativ zu dem Hauptteil der Strukturschicht mechanisch verstärkt sind (20),
so dass die Strukturschicht (4) beim Entfalten des Airbags entlang den mechanischen Schwächungen (18) einreißt, wobei die Klappe (10) und die Gesamtheit der Stege (14) eine Anordnung bilden, die sich durch Verlagerung relativ zu dem Rest der Abdeckung öffnet.

2. Abdeckung für ein Armaturenbrett gemäß Anspruch 1, **dadurch gekennzeichnet, dass** die mechanischen Schwächungen durch Nuten (18) ausgebildet sind.

3. Abdeckung für ein Armaturenbrett gemäß einem der Ansprüche 1 und 2, **dadurch gekennzeichnet, dass** die Stege eine Rippe (20) integrieren, die sich relativ zu der Ausdehnungsrichtung der Öffnungen, zwischen denen sich der jeweilige Steg erstreckt, quer erstreckt, um die Stege mechanisch zu verstärken.

4. Abdeckung für ein Armaturenbrett gemäß einem der vorhergehenden Ansprüche, **dadurch gekennzeichnet, dass** der Hauptteil (12), die Klappe (10) und die Stege (14) eine Einblock-Anordnung definieren.
